# EUROPÄISCHE PATENTSCHRIFT

(11) **EP 2 374 587 B1**
(45) Veröffentlichungstag und Bekanntmachung des Hinweises auf die Patenterteilung: **29.07.2015**
(21) Anmeldenummer: 10159477.8
(22) Anmeldetag: 09.04.2010
(51) Int. Cl.: B27D 5/00, B27G 11/00, C09J 5/06, C09J 7/02

(54) **Verfahren zum Herstellen von Beschichtungsmaterial**
Method for manufacturing coating material
Procédé de fabrication de matériau de revêtement

(43) Veröffentlichungstag der Anmeldung: 12.10.2011
(73) Patentinhaber: Homag Holzbearbeitungssysteme AG, 72296 Schopfloch (DE)
(72) Erfinder: Schmid, Johannes, 72181 Starzach (DE)
(74) Vertreter: Hoffmann Eitle

(56) Entgegenhaltungen:
- EP-A1- 1 860 596
- EP-A1- 1 990 152
- EP-A1- 2 093 433
- EP-A2- 1 800 813
- DE-A1- 19 939 073
- DE-A1-102006 021 171
- DE-A1-102007 062 554
- DE-A1-102008 003 747
- DE-U1-202007 011 911
- DE-U1-202009 009 253
- US-A1- 2003 152 766

## Beschreibung

### Technisches Gebiet

Die vorliegende Erfindung betrifft ein Verfahren zum Herstellen von Beschichtungsmaterial für Werkstücke, insbesondere plattenförmige oder dreidimensional geformte Werkstücke, die zumindest abschnittsweise aus Holz, Holzwerkstoffen, Kunststoff oder dergleichen unterstehen, gemäß dem Oberbegriff des Anspruchs 1. Ein solches Verfahren ist aus der DE 20 2009 009 253 U bekannt.

Unter Beschichtung wird in dieser Anmeldung ein festes Beschichtungsmaterial, wie zum Beispiel eine bahnförmige oder streifenförmige Schmalflächenbeschichtung aus Kunststoff oder Echtholzfurnier (mit begrenzter elastischer Verformbarkeit) verstanden.

### Stand der Technik

Besonders im Bereich der Möbelindustrie werden plattenförmige Werkstücke verarbeitet, die an den geschnittenen Werkstückschmalflächen eine raue Oberflächenstruktur aufweisen. Verschiedene Verfahren haben sich im Stand der Technik etabliert, um diese Werkstückschmalflächen zu beschichten. Verbreitet wird ein bahnförmiges oder streifenförmiges Beschichtungsmaterial an den Werkstückschmalflächen, zum Beispiel durch Verkleben, angebracht. Die bekannten Verfahren haben das gemeinsame Problem, dass die Beschichtung aufwandminimal aufgebracht werden soll, eine haltbare Verbindung zwischen Beschichtung und Basismaterial erzielt wird und eine Verklebung zwischen Basismaterial und Beschichtungsmaterial möglichst wenig sichtbar sein soll.

Es hat sich gezeigt, dass zum Herstellen des Basismaterials, des Beschichtungsmaterials und zum Herstellen der Verklebung zwischen dem Basismaterial und einem Werkstück jeweils sehr spezifisches Know-how erforderlich ist. Der Hersteller des Basismaterials hat oft Probleme damit, das Basismaterial mit einer Funktionsschicht zum Verkleben zu versehen, die den heutigen hohen Anforderungen an die Haltbarkeit und Optik der Verklebung genügt. Insbesondere besteht ein Problem darin, dass die Funktionsschicht zum Verkleben farblich genau an das Basismaterial des Beschichtungsmaterials und auch an das Werkstück angepasst sein muss, um später nicht sichtbar zu sein. Bei der heute herrschenden hohen Variantenvielfalt an Produkten besteht hier das Problem, Funktionsschichten zum Verkleben mit geringem Aufwand in einer geforderten Farbabstimmung herzustellen.

Aus der DE 10 2008 003 747 A1 ist ein Verfahren zur Verklebung eines Kunststoffprofils mit einem insbesondere plattenförmigen Werkstoffsubstrat mittels eines Klebstoffs bekannt, wobei zumindest der mit dem Werkstoffsubstrat zu verklebende Bereich des Kunststoffprofils oder der Kunststofffolie zur Verklebung mit dem Werkstoffsubstrat mit einem Haftvermittler versehen wird. Vor dem Aufbringen der Haftvermittlungsschicht kann bevorzugt eine Vorbehandlung, z.B. eine oxidative Vorbehandlung, erfolgen. Nach dem Aufbringen des Haftvermittlers wird der eigentliche Klebstoff, z.B. ein Dispersions- bzw. Schmelzklebstoff, auf das mit dem Haftvermittler beschichtete Werkstück aufgebracht.

Die EP 1 800 813 A2 beschreibt ein Verfahren zur Beschichtung von Bauteilen aus Holz, Holzwerkstoffen, Kunststoffen oder dergleichen. Bei dem Verfahren wird eine solide Beschichtung, z.B. ein Echtholzfurnier, auf eine Fläche des Bauteils aufgebracht. Das Bauteil und die solide Beschichtung werden relativ zu einander bewegt und mit Klebstoff im Bereich einer Andruckzone miteinander verbunden. Der Klebstoff wird im Bereich einer Wirkzone durch Bestrahlung mit mindestens einem Laser aktiviert oder reaktiviert und anschließend durch ein Andruckelement die solide Beschichtung mit dem Bauteil verbunden.

Aus der EP 1 860 596 A1 ist eine Identifizierungsvorrichtung zum Ressourcenmanagement von Meterware bekannt. Es wird beschrieben, dass Beschichtungswerkstoffe, wie z.B. Kantenbeschichtungen, auf Rollen aufgewickelt und dann gelagert werden, um anschließend der Verarbeitung zugeführt zu werden.

### Darstellung der Erfindung

Es ist daher Aufgabe der vorliegenden Erfindung ein Verfahren zum Herstellen von Beschichtungsmaterial zum Beschichten von Werkstücken zur Verfügung zu stellen, das die genannten Nachteile behebt. Das erfindungsgemäße Verfahren soll es insbesondere ermöglichen, ein bestehendes Basismaterial eines Beschichtungsmaterials mit einer Funktionsschicht zum Verkleben mit einem Werkstück zu versehen, die zum Verkleben des Beschichtungsmaterials mit einem Werkstück aktivierbar ist.

Erfindungsgemäß wird diese Aufgabe durch ein Verfahren mit den Merkmalen des Patentanspruchs 1 gelöst. In den Unteransprüchen finden sich vorteilhafte Ausgestaltungen und Verbesserungen der Erfindung.

Das erfindungsgemäße Verfahren ermöglicht es, ein vorhandenes bahnförmiges oder streifenförmiges Basismaterial mit einer Funktionsschicht zu versehen, die durch Energieeinbringung derart aktivierbar ist, dass sie haftende Eigenschaften entfaltet. Die Verfahrensschritte vom Herstellen des Basismaterials, das Aufbringen einer Funktionsschicht auf das Basismaterial, die derart aktivierbar ist, dass sie haftende Eigenschaften entfaltet, und schließlich das Anbringen des Beschichtungsmaterials an einem Werkstück mittels der Funktionsschicht lassen sich mittels der vorliegenden Erfindung zeitlich voneinander entkoppeln. Damit ist eine Zwischenlagerung sowohl des Basismaterials als auch des Basismaterials mit der aufgebrachten Funktionsschicht möglich. Somit lässt sich das Beschichten der Werkstücke weiter flexibilisieren. Der Verfahrensschritt von dem Vorbehandeln einer Oberfläche des Basismaterials ermöglicht es, das Basismaterial in seinen Eigenschaften für das Aufbringen der Funktionsschicht anzupassen. Dadurch kann sehr flexibel auf die Eigenschaften des bereitgestellten Basismaterials reagiert werden. Beispielsweise kann das Basismaterial in seinen Eigenschaften für das Aufbringen der Funktionsschicht angepasst werden. Ferner ist auch eine Anpassung des Basismaterials an das zu beschichtende Werkstück möglich.

Bevorzugt umfasst das Vorbehandeln eine Behandlung, die ausgewählt ist aus der Gruppe bestehend aus Erwärmen, Vorreinigen, Entfetten, Verbessern der Haftungs- und Benetzungseigenschaften und Vermindern der elektrostatischen Aufladung. Bevorzugt kommen je nach Material und/oder Oberflächenbeschaffenheit des Basismaterials eine oder mehrere der vorgenannten Behandlungsalternativen zum Einsatz. Dadurch kann den Eigenschaften der unterschiedlichsten Basismaterialien Rechnung getragen werden. Durch das Vorbehandeln lässt sich eine spezifische Funktionsschicht in Kombination mit ganz unterschiedlichen Basismaterialien verwenden. Ferner ist es möglich, entsprechend den gewünschten Produktanforderungen durch das Vorbehandeln das Aufbringen einer Funktionsschicht mit bestimmten Eigenschaften zu ermöglichen. Dadurch ergibt sich eine größere Freiheit in der Auswahl von möglichen Funktionsschichten zu einem spezifischen Basismaterial, je nach den Anforderungen, die das spätere Werkstück aufweisen soll. Ferner kann durch das Vorbehandeln eine Anpassung des Basismaterials an die fertigungstechnischen Möglichkeiten erfolgen, die in einem Fertigungsbetrieb vorhanden sind, der später das Beschichtungsmaterial auf das zu beschichtende Werkstück aufbringt.

Besonders bevorzugt erfolgt das Aufbringen der Funktionsschicht mittels einer Rolle oder bevorzugt einer Düse oder einer Matrize. Das Aufbringen erfolgt dabei bevorzugt in Abhängigkeit von der Konsistenz der Funktionsschicht und der Beschaffenheit des vorbehandelten Basismaterials. Das Aufbringen der Funktionsschicht mittels einer Düse erlaubt dabei eine besonders gleichmäßige Verteilung der Funktionsschicht. Soll eine Funktionsschicht mit einer größeren Dicke aufgetragen werden, erfolgt das Aufbringen der Funktionsschicht bevorzugt mittels einer Rolle.

Gemäß der vorliegenden Erfindung werden der Funktionsschicht vor dem Auftragen Zusatzstoffe zudosiert. Erfindungsgemäß kommen dabei Farbpigmente und Zusatzstoffe zum Erhöhen des Energieabsorptionsvermögens der Funktionsschicht zum Einsatz. Durch die Zugabe von Farbpigmenten kann die Funktionsschicht in ihrer Farbgebung an das Basismaterial oder das mit dem Beschichtungsmaterial zu beschichtende Werkstück angepasst werden. Das Zudosieren von Zusatzstoffen zum Erhöhen des Energieabsorptionsvermögens der Funktionsschicht ermöglicht es, das Aktivieren der haftenden Eigenschaften der Funktionsschicht mittels der Energiequelle einzustellen. So ermöglicht es beispielsweise ein erhöhtes Energieabsorptionsvermögen der Funktionsschicht die Vorschubgeschwindigkeit beim Aufbringen der Funktionsschicht auf ein Werkstück zu erhöhen, ohne dass dabei die Energiequelle zum Einbringen der Energie in ihrer Leitung erhöht werden muss. Durch Verwendung des Lasers um die Funktionsschicht im kontinuierlichen Durchlauf zu aktivieren, wird durch ein Erhöhen des Energieabsorptionsvermögens der Funktionsschicht die Vorschubgeschwindigkeit erhöht, ohne dass die Leistung des Lasers erhöht werden muss. Geht man von einem unveränderten Laser aus, so lassen sich allein durch die Zugabe von Zusatzstoffen zum Erhöhen des Energieabsorptionsvermögens der Funktionsschicht höhere Vorschubgeschwindigkeiten beim Aufbringen des Beschichtungsmaterials auf das Werkstück realisieren. Ferner wird das Absorptionsspektrum der Funktionsschicht an das Lichtemissionsspektrum bei Verwendung des Lasers angepasst, um eine optimale Energieausbeute zu erzielen. Auf diese Weise kann die Energiebilanz der Aktivierung der Funktionsschicht und damit die Energiebilanz des Aufbringens des Beschichtungsmaterials auf ein Werkstück insgesamt verbessert werden.

Die Energiequelle zum Einbringen von Energie in die Funktionsschicht ist ein Laser. Der Laser ermöglicht dabei einen punktuell genau dosierbaren Energieeintrag in die Funktionsschicht. Der Laser ermöglicht ferner eine besonders schnelle Fokussierung der Energie auf einem bestimmten Bereich des Beschichtungsmaterials. Ferner lässt sich mittels des Lasers die Energie besonders schnell bereitstellen, was eine besonders gute Prozessdynamik ermöglicht.

Erfindungsgemäß wird das Beschichtungsmaterial nach dem Aufbringen der Funktionsschicht nach zumindest teilweisem Abkühlen der Funktionsschicht aufgerollt. Erfindungsgemäß wird das Beschichtungsmaterial nach dem Aufbringen der Funktionsschicht nach zumindest teilweisem Abkühlen der Funktionsschicht aufgerollte und dann zum Beispiel zwischen gelatert oder transportiert. Mit dem erfindungsgemäßen Verfahren ist das Erstellen des aktivierbaren Beschichtungsmaterials von dem Aufbringen des Beschichtungsmaterials auf ein Werkstück zeitlich und räumlich entkoppelt. Dies ermöglicht eine größere Flexibilität bei der Beschichtung von Werkstücken. So ist es zum Beispiel möglich, das Herstellen des Beschichtungsmaterials und das eigentliche Beschichten der Werkstücke von getrennten Dienstleistern durchführen zu lassen. Dadurch können die Fertigungskosten gesenkt und die Produktqualität erhöht werden.

Gemäß einer bevorzugten Ausführungsform der vorliegenden Erfindung wird das Verfahren im Durchlauf bei sich kontinuierlich oder intermittierend bewegendem Basismaterial durchgeführt. Mit dieser Verfahrensvariante kann ein besonders hoher Materialdurchlauf realisiert werden. Ferner kann der zur Aktivierung der Funktionsschicht verwendeten Laser im Wesentlichen kontinuierlich betrieben werden, was den Energieverbrauch senkt und das Ausfallrisiko minimiert.

### Kurze Beschreibung der Zeichnungen

Von den Figuren zeigen:
- Fig. 1: eine schematische Querschnittsansicht des Ablaufs des erfindungsgemäßen Verfahrens zum Herstellen von Beschichtungsmaterial gemäß einem ersten Ausführungsbeispiel; und
- Fig. 2: eine schematische Querschnittsansicht des Ablaufs eines nicht erfindungsgemäßen Verfahrens zum Herstellen von Beschichtungsmaterial.

### Ausführliche Beschreibung von bevorzugten Ausführungsformen

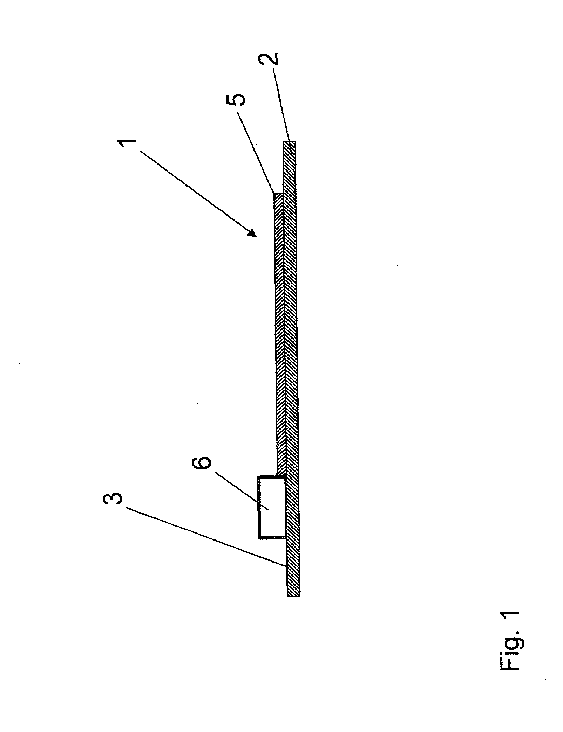

Fig. 1 zeigt eine schematische Querschnittsansicht des Ablaufs des erfindungsgemäßen Verfahrens zum Herstellen von Beschichtungsmaterial 1 gemäß einem ersten Ausführungsbeispiel. Gemäß diesem Ausführungsbeispiel wird ein bahnförmiges Basismaterial 2, das im Bild unten schraffiert dargestellt ist, bereitgestellt. Das Basismaterial 2 wird einer als Rechteck dargestellten Beschichtungsstation 6 zugeführt. Eine Oberfläche 3 des Basismaterials 2, im Bild die Oberseite, wird vorbehandelt, indem sie gereinigt wird. Anschließend wird eine Funktionsschicht 5, die im Bild ebenfalls schraffiert dargestellt ist, auf das Basismaterial 2 aufgebracht, so dass das Beschichtungsmaterial 1 gebildet wird.

Das erfindungsgemäße Verfahren erlaubt es, Beschichtungsmaterial 1 herzustellen, das basierend auf einem Basismaterial 2 mit dem Zwischenschritt einer Vorbehandlung mittels einer durch Laser aktivierbaren Funktionsschicht 5 versehen wird. Der Zwischenschritt der Vorbehandlung erlaubt es, die Funktionsschicht 5 auf Basismaterial 2 mit unterschiedlichster Beschaffenheit aufzubringen. Ferner können durch die Vorbehandlung Funktionsschichten 5 auf das Basismaterial 2 aufgebracht werden, die ohne die Vorbehandlung nicht verwendbar wären. Das erfindungsgemäße Verfahren erlaubt es somit auf eine besonders flexible Weise Beschichtungsmaterial 1 für Werkstücke herzustellen.

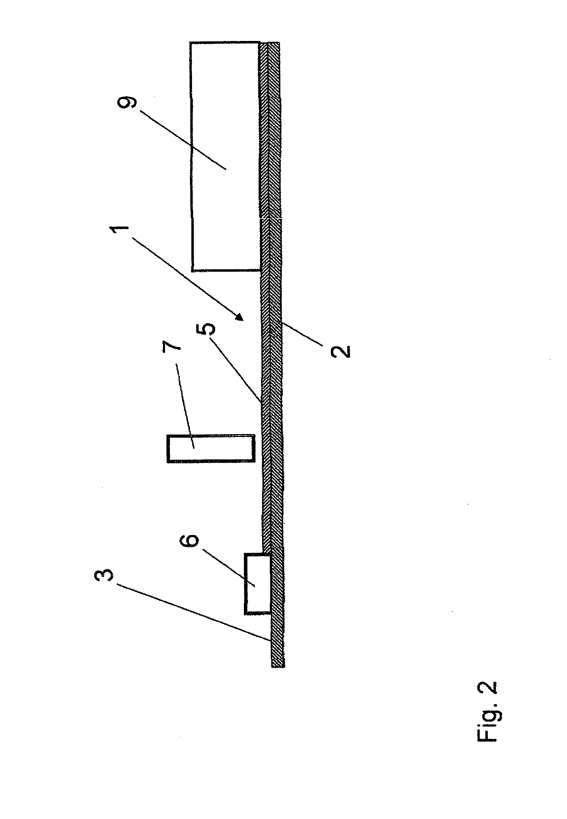

Fig. 2 zeigt eine schematische Querschnittsansicht des Ablaufs eines nicht erfindungsgemäßen Verfahrens. Hier ist ein Fügen des Beschichtungsmaterials 1 auf ein Werkstück 9 dargestellt. Vor dem Fügen des Beschichtungsmaterials 1 auf das Werkstück 9 folgt eine Aktivierung der Funktionsschicht 5 mittels der Energiequelle 7. Bevorzugt wird das Beschichtungsmaterial 1 an das Werkstück 9 angepresst.

### Bezugszeichenliste

- 1: Beschichtungsmaterial
- 2: Basismaterial
- 3: Oberfläche des Basismaterials
- 5: Funktionsschicht
- 6: Beschichtungsstation
- 7: Energiequelle
- 9: Werkstück

## Patentansprüche

1. Verfahren zum Herstellen von Beschichtungsmaterial (1) für Werkstücke, mit den Schritten:
Bereitstellen eines bahnförmigen oder streifenförmigen Basismaterials (2),
Zuführen des Basismaterials (2) zu einer Beschichtungsstation (6),
Vorbehandeln mindestens einer Oberfläche (3) des Basismaterials (2), Aufbringen einer Funktionsschicht (5) auf die vorbehandelte Oberfläche des Basismaterials (2), wobei
die Funktionsschicht (5) mittels einer Energiequelle (7) derart aktivierbar ist, dass sie haftende Eigenschaften entfaltet, **dadurch gekennzeichnet, dass** die mindestens eine Energiequelle (7) ein Laser ist, und
der Funktionsschicht (5) vor dem Auftragen Farbpigmente und Zusatzstoffe zum Erhöhen des Energieabsorptionsvermögens der Funktionsschicht (5) zudosiert werden;
Aufrollen des Beschichtungsmaterials (1) nach dem Aufbringen der Funktionsschicht (5) nach zumindest teilweisem Abkühlen der Funktionsschicht (5) nach dem Aufbringen der Funktionsschicht (5), und
Aktivieren der haftenden Eigenschaften der Funktionsschicht mit dem Laser, wobei das Absorptionsspektrum der Funktionsschicht an das Lichtemissionsspektrum bei Verwendung des Lasers angepasst ist.

2. Verfahren nach Anspruch 1, **dadurch gekennzeichnet, dass** das Vorbehandeln eine Behandlung umfasst, die ausgewählt ist aus der Gruppe bestehend aus Erwärmen, Vorreinigung, Entfetten, Verbessern der Haftungs- und Benetzungseigenschaften und Verminderung der elektrostatischen Aufladung.

3. Verfahren nach Anspruch 1 oder 2, **dadurch gekennzeichnet, dass** die Art der Vorbehandlung selektiv in Abhängigkeit von dem Material und/oder der Oberflächenbeschaffenheit des Basismaterials (2) ausgewählt wird.

4. Verfahren nach einem der vorhergehenden Ansprüche, **dadurch gekennzeichnet, dass** das Aufbringen der Funktionsschicht (5) mittels einer Rolle und/oder einer Düse und/oder einer Matrize erfolgt.

5. Verfahren nach einem der vorhergehenden Ansprüche, **dadurch gekennzeichnet, dass** das Aufbereiten der aufzutragenden Funktionsschicht (5) mittels Extruder und/oder Schmelzbecken erfolgt.

6. Verfahren nach einem der vorhergehenden Ansprüche, **dadurch gekennzeichnet, dass** das Basismaterial (2) ausgewählt ist aus der Gruppe bestehend aus Kunststoff, insbesondere thermoplastischen Kunststoff, Furnier, Papier, Pappe, Metall, und Kombinationen hiervon.

7. Verfahren nach einem der vorhergehenden Ansprüche, **dadurch gekennzeichnet, dass** das Verfahren im Durchlauf bei sich kontinuierlich oder intermittierend bewegendem Basismaterial (2) durchgeführt wird.

## Claims

1. Method for manufacturing coating material (1) for workpieces, with the steps of:
providing a web-like or strip-like base material (2),
delivering the base material (2) to a coating station (6),
pretreating at least one surface (3) of the base material (2),
applying a functional layer (5) to the pretreated surface of the base material (2), wherein
the functional layer (5) can be activated by means of an energy source (7) in such a way that it develops adhesive properties, **characterised in that** the at least one energy source (7) is a laser, and
pigments and additives for increasing the energy absorption capacity of the functional layer (5) are added to the functional layer (5) before application;
rolling up the coating material (1) after applying the functional layer (5) after at least partially cooling the functional layer (5) after applying the functional layer (5), and
activating the adhesive properties of the functional layer with the laser, wherein the absorption spectrum of the functional layer is adapted to the light emission spectrum when using the laser.

2. Method according to claim 1, **characterised in that** the pretreatment includes a treatment which is selected from the group consisting of heating, preliminary cleaning, degreasing, improving the adhesive and wetting properties and reducing the electrostatic charge.

3. Method according to claim 1 or 2, **characterised in that** the type of pretreatment is chosen selectively as a function of the material and/or the surface properties of the base material (2).

4. Method according to any of the preceding claims, **characterised in that** application of the functional layer (5) is effected by means of a roller and/or a nozzle and/or a die.

5. Method according to any of the preceding claims, **characterised in that** processing of the functional layer (5) to be applied is effected by means of an extruder and/or melting tank.

6. Method according to any of the preceding claims, **characterised in that** the base material (2) is selected from the group consisting of plastic, in particular thermoplastic material, veneer, paper, cardboard, metal and combinations thereof.

7. Method according to any of the preceding claims, **characterised in that** the method is carried out in a continuous process while the base material (2) is moving continuously or intermittently.

## Revendications

1. Procédé de fabrication d'un matériau de revêtement (1) pour des pièces, comprenant les étapes suivantes :
préparation d'un matériau de base (2) sous forme de bande ou de ruban,
amenée du matériau de base (2) vers une station de revêtement (6),
pré-traitement d'au moins une surface (3) du matériau de base (2),
application d'une couche fonctionnelle (5) sur la surface pré-traitée du matériau de base (2),
la couche fonctionnelle (5) pouvant être activée au moyen d'une source d'énergie (7), de manière à développer des propriétés d'adhérence, **caractérisée en ce qu'**au moins une source d'énergie (7) est un laser, et
**en ce que** préalablement à l'application de la couche fonctionnelle (5), des pigments et des additifs lui sont ajoutés afin d'élever la capacité d'absorption de ladite couche fonctionnelle (5) ;
enroulement du matériau de revêtement (1) suivant l'application de la couche fonctionnelle (5) après un refroidissement au moins partiel de la couche fonctionnelle (5) consécutif à l'application de la couche fonctionnelle (5), et
activation par laser des propriétés d'adhérence de la couche fonctionnelle, le spectre d'absorption de la couche fonctionnelle étant ajusté au spectre d'émission lumineuse lors de l'utilisation du laser.

2. Procédé selon la revendication 1, **caractérisé en ce que** le pré-traitement comprend un traitement sélectionné dans le groupe composé de : chauffage, pré-nettoyage, dégraissage, amélioration des propriétés d'adhérence et de réticulation, et réduction de la charge électrostatique.

3. Procédé selon la revendication 1 ou 2, **caractérisé en ce que** le type de pré-traitement est choisi par sélection en fonction du matériau et/ou des caractéristiques de surface du matériau de base (2).

4. Procédé selon l'une des revendications précédentes, **caractérisé en ce que** la couche fonctionnelle (5) est appliquée au moyen d'un rouleau, et/ou d'une buse, et/ou d'une matrice.

5. Procédé selon l'une des revendications précédentes, **caractérisé en ce que** la couche fonctionnelle (5) à appliquer est préparée au moyen d'une extrudeuse et/ou d'une cuve de fusion

6. Procédé selon l'une des revendications précédentes, **caractérisé en ce que** le matériau de base (2) est sélectionné dans le groupe composé de : matière plastique, en particulier matière thermoplastique, placage, papier, carton, métal et des combinaisons de ceux-ci.

7. Procédé selon l'une des revendications précédentes, **caractérisé en ce que** ledit procédé est exécuté par passage en machine avec déplacement continu ou intermittent du matériau de base (2).
